# EUROPEAN PATENT SPECIFICATION

(11) **EP 3 731 619 B1**
(45) Date of publication and mention of the grant of the patent: **17.01.2024**
(21) Application number: 18833831.3
(22) Date of filing: 18.12.2018
(51) Int. Cl.: A01D 78/10, A01D 80/00

(54) **APPARATUS AND METHOD FOR IMPROVING THE QUALITY OF GRASS AND CLOVER BY TEDDING**
VORRICHTUNG UND VERFAHREN ZUR VERBESSERUNG DER QUALITÄT VON GRAS UND KLEE DURCH ZETTEN
APPAREIL ET PROCÉDÉ D'AMÉLIORATION DE LA QUALITÉ DE L'HERBE ET DU TRÈFLE PAR FANAGE

(30) Priority: 29.12.2017 DK PA201700752
(43) Date of publication of application: 04.11.2020
(73) Proprietor: Agro Intelligence ApS, 8200 Aarhus N (DK)
(72) Inventor: GREEN, Ole, 6940 Lem St. (DK); JACOBSEN, Henrik Lynge, 4652 Hårlev (DK); STEEN, Kim Arild, 8520 Lystrup (DK); NIELSEN, Søren Kirkegaard, 8600 Silkeborg (DK)
(74) Representative: Rasmussen, Martin Hoffgaard
(86) International application number: PCT/DK2018/050372
(87) International publication number: WO 2019/129335

(56) References cited:
- EP-A1- 2 436 251
- EP-A1- 3 095 316
- EP-A2- 2 850 934
- DE-A1-102010 047 071
- US-A1- 2002 011 056

## Description

### Field of the invention

The present invention relates in general to the field of agriculture. More specifically the present invention relates in a first aspect to a tedding apparatus for the tedding of cut crop of an agricultural field, wherein said cut crop comprising grass and clover. In a second aspect the present invention relates to the use of such a tedding apparatus for producing a biomass feedstock for silage. In a third aspect the present invention relates to a method for tedding cut crop comprising grass and clover to be used as feedstock in a silage manufacturing process.

### Background of the invention

Silage has for hundreds of years been used as fodder for cattle and other animals in farming. Silage is formed from lignocellulosic biomass, such as grass and clover by fermentation where lactic acid forming bacteria participate in the fermentation process.

Silage has the advantage that, when stored under conditions in absence of oxygen, it remains relatively stable without any profound change or deteriorating in composition during long periods of time.

Accordingly, silage represents a valuable source of fodder to be fed to animals during those parts of the seasons where fresh plants are not readily available.

As mentioned above grass is a common feedstock for the manufacture of silage. However, also clover is a common feedstock for the manufacture of silage.

Grass and clover are usually grown in the same agricultural for the purpose of obtaining a good feed composition as cow feed and in respect of nutrient value in the resulting silage they complement each other well.

Accordingly, when producing silage from a grass and clover field, the grass and clover are cut by cutting using a mower.

After the grass and clover have been cut the grass and clover is usually also subjected to a conditioning process in which the grass and clover is being subjected to a mechanically impact. The purpose of this conditioning process is, by mechanical impact, to crack open the cells of the plant material in order to allow moist within the cells to evaporate or be removed by other means with the view to obtain a faster drying of the grass and clover.

The conditioning operation may be performed by a combined mower and conditioning apparatus. Alternatively, the conditioning of the grass and clover may be performed in separate operations.

NL 2016963B1 and EP 2 850 934 disclose an apparatus for mowing and tedding agricultural biomass, wherein the apparatus comprises mechanical tedding devices and a control unit for controlling the operation of said apparatus.

Subsequent to cutting and conditioning, the grass and clover are left in the field for a couple of days where it is being subjected to an appropriate field management, such as performing one or more inversions or tedding operations in order to further dry it to a desirable moist content. Hereafter the grass and clover is collected and stacked in a silo.

The tedding operation involves imparting a mechanical impact to the cut biomass so as to move and preferably turn over the biomass with the purpose of accelerating the drying process.

Numerous cycles of growing new batches of grass and clover, cutting it, conditioning it allowing it to partly dry, tedding it, collecting and stacking it in a silo are performed throughout the growth season of the grass and clover.

It has been found that grass, due to its more rough and sturdy structure, compared to clover, needs a more severe mechanical impact in the tedding operation in order to ultimately arrive at the same moisture content at the point in time of stacking the biomass in a silo, compared to the clover growing in the same area.

Accordingly, most often when harvesting grass and clover for use as feedstock in a silage manufacturing process and using the above process steps of growing, cutting, conditioning, partly drying, tedding, collecting and stacking grass and clover, collected material will be more heterogeneous when larger variations is occurring in the clover/grass ratio, which may give a heterogeneous feed quality and a more difficult feed to measure and use in the feed plan on farm level.

It is an objective of the present invention to provide apparatuses and methods that will allow manufacturing of a biomass feedstock based on grass and clover which, at the time of stacking in a silo, will be more homogenous as to moisture content.

### Brief description of the invention

These objectives are fulfilled according to the first, the second and the third aspect of the present invention.

Accordingly, the first aspect of the present invention relates to a tedding apparatus for tedding cut agricultural biomass lying in an agricultural field according to claim 1. Preferred embodiments are provided in the dependent claims.

In a second aspect the present invention relates to a use of a tedding apparatus according to the first aspect of the present invention in the manufacture of a biomass feedstock based on grass and clover.

In a third aspect the present invention relates to a method for tedding of cut biomass lying in an agricultural according to claim 15.

Accordingly, with the present invention an improved biomass quality, in terms of increased homogeneity of moisture content of the biomass, can be obtained in respect of grass and clover harvested in a grass/clover field. This is advantageous when using the cut biomass as a feedstock in the manufacture of silage and may also be advantageous when using the cut biomass as fresh fodder to animals.

### Brief description of the figures

Fig. 1 is diagrammatic top view illustrating an embodiment of a tedding apparatus of the present invention.
Fig. 2 is a perspective view illustrating two modes for adjusting the severity imparted to a biomass by the mechanical tedding device of the apparatus of the first aspect of the present invention.
Fig. 3 is a diagram illustrating one embodiment of the working mode of the control system for use with the mechanical tedding device of the tedding apparatus of the present invention.
Fig. 4 is a side view illustrating one mode of providing the estimation information to be used with the mechanical tedding device of the tedding apparatus of the present invention.
Fig. 5 is a diagrammatic representation of part of the working mode of an image processing device of the tedding apparatus of the present invention.
Fig. 6a, 6b and 6c are diagrammatic representations of the concept of learning data and learning images as applied in the present application.

### Detailed description of the invention

### The first aspect of the present invention

In its first aspect the present invention relates to a tedding apparatus for tedding cut agricultural biomass lying in an agricultural field according to claim 1

The apparatus according to the first aspect of the present invention is accordingly configured for allowing the tedding of cut biomass in an agricultural field, where the severity of the mechanical impact imposed by the tedding device(s) is adjusted in correspondence with the variation of the grass coverage and/or the clover coverage throughout the filed or part thereof. Thereby, an improved quality of the cut biomass is obtained in that the biomass with have a reduced variation as to moisture content. This may be a great advantage upon using the cut biomass in a process for the manufacture of silage, and may also be an advantage in the use of the biomass as fresh feed for animals.

In the present description and in the appended claims the following definitions shall be adhered to:
Grass: The term "grass" may be defined as any plant belonging to the family Poacea or Gramineae, preferably of the genus Lolium or Phleum, such as Westerwolds Ryegrass, Italian Ryegrass, Hybrid Ryegrass, Perennial Ryegrass, Timothy grass.

Preferably, the grass species is a species which traditionally and conventionally has been used as feedstock in a silage manufacturing process.

Clover: The term "clover" may be defined as any plant belonging to the family Fabaceae, preferably of the genus Trifolium, such as red and white clover species.

Preferably, the clover species is a species which traditionally and conventionally has been used as feedstock in a silage manufacturing process.

Crop: The term "crop" is defined as being grass or clover or a mixture thereof.

A specific crop: The term "a specific crop" is defined as either being grass or being clover. Weed: The term "weed" is being defined as any plant not being grass and not being clover. Biomass: The term "biomass" is being defined as plant material comprising grass and/or clover and/or weed.

A specific crop coverage: The term "a specific crop coverage" is being defined as that relative area of a portion of an agricultural field covered by that specific crop.

In the present description and in the appended claims the term "coverage" may be expressed as a percentage or as a fraction, or as a ratio in relation to the other type of crop and/or in relation to weed.

In the apparatus of the first aspect of the present invention said estimation information relating to an estimated magnitude of a specific crop coverage is independently selected from the group comprising:
- coverage of grass; and/or
- coverage of clover; and/or
- coverage of weed; and/or
- a ratio relating to: coverage of grass / coverage of clover; and/or
- a ratio relating to: coverage of grass / coverage of clover / coverage of weed.

Using these definitions of the estimation information will in a reliable manner provide information as to the grass coverage and/or the clover coverage of the agricultural field.

In one embodiment of the apparatus of the first aspect of the present invention said mechanical tedding device comprises a rotating hub comprising a plurality of tines, wherein said tines are configured to impose a mechanical impact to said agricultural biomass; said hub preferably is being configured for performing a rotation around an essentially vertical rotational axis.

Such a design of the mechanical tedding devices provides for an efficient tedding of the biomass.

In one embodiment of the apparatus of the first aspect of the present invention said hub comprises a plurality of tine bars having a first end and a second end; wherein in respect of each tine bar said tine bar is being connected to said hub at its first end; and wherein a plurality of tines are connected to said second end of said tine bar.

Such a design of the mechanical tedding devices provides for an efficient tedding of the biomass.

In one embodiment of the apparatus of the first aspect of the present invention said tine bar in respect of one or more of said plurality of tine bars, comprises a bend.

In one embodiment of the apparatus of the first aspect of the present invention said adjustment means, in respect of one or more of said mechanical tedding devices, is configured for performing an angle adjustment of said tine bar in said hub, thereby adjusting the angle α of said tines with the vertical direction (Y), so as to adjust the lifting effect of said plurality of tines of said tine bar.

Hereby the severity of the impact on the biomass imparted by the tedding device may be adjusted.

In one embodiment of the apparatus of the first aspect of the present invention said adjustment means, in respect of one or more of said mechanical tedding devices, is configured for adjustment of the speed of rotation of said hub.

Hereby the severity of the impact on the biomass imparted by the tedding device may be adjusted.

In one embodiment of the apparatus of the first aspect of the present invention said control unit, in respect of one or more of said tedding devices, is being configured to provide said severity adjustment signal to said mechanical tedding device according to a predetermined severity adjustment algorithm.

Hereby the severity of the tedding can be performed according to a predetermined tedding scheme.

In one embodiment of the apparatus of the first aspect of the present invention said predetermined severity adjustment algorithm is based on a correlation between the said estimation information on the one hand and a quantified severity on the other hand.

Hereby the severity of the tedding can be performed, depending on the grass coverage and/or the clover coverage.

In one embodiment of the apparatus of the first aspect of the present invention said control unit, in respect of one or more of said mechanical tedding devices, is being configured to provide said severity adjustment signal to said mechanical tedding device in such a way that a relatively high estimated magnitude of grass coverage and/or a relatively low estimated magnitude of clover coverage of said portion of said agricultural field corresponds to a relatively high degree of severity of the mechanical tedding being provided to said agricultural biomass by said tedding device; whereas a relatively low estimated magnitude of grass coverage and/or a relatively high estimated magnitude of clover coverage corresponds to a relatively low degree of severity of the mechanical tedding being provided to said agricultural biomass by said tedding device.

Such a tedding severity scheme provides for achieving a more homogeneous moisture content in the various parts of biomass comprising the crop of grass and clover.

In one embodiment of the apparatus of the first aspect of the present invention a relatively high degree of severity of the mechanical tedding is provided by a relatively high rotational speed of said hub and/or a relatively low lifting effect of said tines; whereas a relatively low degree of severity of the mechanical tedding is provided by a relatively low rotational speed of said hub and/or a relatively high lifting effect of said tines.

This embodiment accordingly provides for adjustment of the tedding severity imparted to the biomass via two different modes of adjustment which may be used independently or in combination.

In one embodiment of the apparatus of the first aspect of the present invention said control unit is configured for independently providing said severity adjustment signal to one or more of said mechanical tedding devices.

This embodiment allows for independently tedding different portions of the field with different tedding severities.

In one embodiment of the apparatus of the first aspect of the present invention the number of mechanical tedding devices arranged on said frame is 1 - 40, such as 2 - 35, for example 5 - 30, e.g. 10 - 25, such as 15 - 20.

These numbers of tedding devices in the apparatus provides for efficient tedding of the biomass.

In one embodiment of the apparatus of the first aspect of the present invention said frame is being configured for being towed by or suspended on an agricultural vehicle; and in such a case said frame comprises coupling means for allowing said frame to be coupled to said vehicle.

Hereby, the tedding apparatus may be in the form of an implement which can be coupled to an agricultural vehicle, such as a tractor.

In one embodiment of the apparatus of the first aspect of the present invention said control unit is configured for providing said severity adjustment signal in the form of an electric signal, and in respect of one or more of said mechanical tedding devices, the severity provided by said mechanical tedding device is being adjusted via an actuator and said mechanical tedding device comprises a regulator configured for adjusting said actuator in response to said electric signal.

This embodiment accordingly advises one way of performing the regulation of the severity provided of one or more of the tedding devices.

In one embodiment of the apparatus of the first aspect of the present invention the actuator is being an electric actuator, a pneumatic actuator or a hydraulic actuator.

In one embodiment of the apparatus of the first aspect of the present invention said actuator is being a hydraulic actuator, and wherein said regulator is being a hydraulic valve.

Such types of actuators and regulators efficiently will provide for adjustment of the severity of the tedding provided by one or more of the tedding devices.

In one embodiment of the apparatus of the first aspect of the present invention said mechanical tedding device, in respect of one or more of said mechanical tedding devices, comprises a sensor for sensing the current severity setting of said mechanical tedding device, and wherein said sensor is coupled to said control unit for providing information to said control unit relating to a current severity setting of said mechanical tedding device.

Hereby the control unit may continuously monitor the setting of the severity imparted by one or more of the mechanical tedding devices.

In one embodiment of the apparatus of the first aspect of the present invention said control unit is coupled to display means, such as in the form of a monitor for allowing an operator to monitor the set up and operation of said apparatus.

In one embodiment of the apparatus of the first aspect of the present invention said control unit is coupled to input means, such as in the form of an alphanumerical keyboard allowing an operator to set up and program said control unit.

These two embodiments provide for better controlling the operation of the tedding apparatus.

In one embodiment of the apparatus of the first aspect of the present invention said control unit comprises or is configured to be connected to a GNSS (Global Navigation satellite system), such as a GPS in order for that control unit to be configured to receive a position indicating signal.

Hereby it is possible, during operation of the tedding apparatus, to correlate the estimation information to the exact location of one or more of the tedding devices.

Prior to the operation of the apparatus of the first aspect of the present invention, it may be necessary to provide the estimation information relating to an estimated magnitude of a specific crop coverage and to store this on a data storage. The procedure of obtaining such estimation information preferably makes use of an optical system which is scanning the agricultural field and performing image processing of the images captured. Below, preferred embodiments of use of such an optical system are disclosed.

In one embodiment of the apparatus of the first aspect of the present invention said estimation information relating to an estimated magnitude of a specific crop coverage being present in said portion of said agricultural field has previously been obtained by an optical system for capturing and processing images of said agricultural field; said optical system comprises:
- an image capturing device configured for capturing images of said portion of said agricultural field;
- an image processing device for analysing an image captured by said image capturing device, so as to provide said estimation information;
- a global navigation satellite system (GNSS), such as a GPS system, configured for receiving a position indicating signal;
- a data storage;
wherein said optical system is coupled to said data storage in such a way that said optical system is being configured to allocate said estimation information which is being provided in respect of said images being captured; and wherein said optical system is being configured to allocate coordinates relating to a geographical position of said images being captured; and wherein optical system is being configured for storing on said data storage a correlation between an estimated magnitude of a specific crop coverage at said portion of said agricultural field on the one hand, and the geographical position of said portion of said agricultural field on the other hand; said correlation thereby representing a specific coverage map of said agricultural field or part thereof.

Such data storage may be in the form of a data storage of the solid state type, such as based on semiconductor technology, or may be in the form of an electromechanical data storage, such as a hard drive, or may alternatively also be a server based data storage, such as a storage place accessible via the internet.

Hereby the agricultural field may be scanned and assessed as to the estimated magnitude of a specific crop coverage which is to be used as input in the control unit of the tedding apparatus.

In one embodiment of the apparatus of the first aspect of the present invention said estimated magnitude of a specific crop coverage said image processing device is configured to perform the following steps:
i) receive information representing an image captured by said image capturing device;
ii) in respect of said representation of said image, performing an image analysis in order to distinguish areas of that image which represents grass and/or clover and/or weed;
iii) summing up all areas determined in step ii) which represent grass and/or summing up all areas determined in step ii) which represent clover and/or summing up all areas determined in step ii) which represent weed;
iv) on the basis of the summing up performed in step iii), providing in respect of said image, said estimation information to be correlated with the position of said portion of said agricultural field.

Hereby the image processing device may provide to said data storage the magnitude of a specific crop coverage in a specific portion of the agricultural field.

In one embodiment of the apparatus of the first aspect of the present invention step ii) is based on analysis of image patch features, such as colour distinction, edge detection of different plant material and morphology of different plant material, use of texture analysis filter(s), or entropy of image patches, making up such image.

In one embodiment of the apparatus of the first aspect of the present invention, step ii) is performed by having said image processing device configured for consulting a representation of a set of learning images, wherein each learning image in the set of learning images comprises a representation of a real image or an artificial image, such as a computer generated image, of a portion of an agricultural field comprising grass and clover and optionally also weed, and wherein distinct elements of said image has been allocated with information relating to which type of plant (grass, clover and optionally weed) that this element represents.

In one embodiment of the apparatus of the first aspect of the present invention step ii) is performed by having said image processing device configured for consulting a representation of learning images in the form of a model capable of performing an algorithm in order to distinguish areas of that image which represents grass and/or clover and/or weed.

In one embodiment of the apparatus of the first aspect of the present invention said model is being configured for utilizing calculated image patch features as defined above.

In one embodiment of the apparatus of the first aspect of the present invention said calculated image patch features are being analysed utilizing a numerical mathematical model based on support vector machines, k-nearest neighbours, decision trees, adaboost, gaussian mixture models or linear discriminant analysis in order to distinguish areas of that image as being as either grass and/or clover and/or weed.

In one embodiment of the apparatus of the first aspect of the present invention said image processing device is configured for utilizing deep learning algorithms and/or artificial intelligence and/or neural network(s).

These techniques for performing the processing of the image processing device provides for providing the estimation information in an efficient way.

In one embodiment of the apparatus of the first aspect of the present invention two or more image capturing devices, which collectively are configured for capturing images of two or more portions of said agricultural field have been used for capturing images of said agricultural field; wherein said two or more portions of said agricultural field are arranged relative to each other in a mutual staggered arrangement in a direction perpendicular to the moving direction of said optical system;
wherein said image processing device, in respect of an image captured by each of said image capturing devices is configured for analysing said image so as to provide an estimation information relating to an estimated magnitude of a specific crop coverage being present in the portion of the agricultural field corresponding to each said image.

Hereby a wide width of the agricultural field may be scanned by the optical system.

In one embodiment of the apparatus of the first aspect of the present invention the number of image capturing devices, which have been used, is 3 - 20, such as 4 - 19, for example 5-18, such as 6 - 17, for example 7 - 16, such as 8 - 15, for example 9 - 14, such as 10 - 13 or 11 - 12.

In one embodiment of the apparatus of the first aspect of the present invention the focus area (F) of said image capturing device(s) of the surface of said agricultural field is having a width, in a direction perpendicular to the direction of movement of said optical system, of 50 - 300 cm, such as 100 - 250 cm, for example 150 - 200 cm.

Hereby a wide width of the agricultural field may be scanned by the optical system.

In one embodiment of the apparatus of the first aspect of the present invention the image capturing device is configured for repeatedly image capturing.

In one embodiment of the apparatus of the first aspect of the present invention said image capturing device is configured for capturing images at a rate of 0.01 - 60, such as 0.5 - 40, such as 1 - 30, e.g. 5 - 20, such as 10 - 15 frames per second (fps).

In one embodiment of the apparatus of the first aspect of the present invention said image processing device is configured for analysing images at a rate of 0.01 - 60, such as 0.5 - 40, such as 1 - 30, e.g. 5 - 20, such as 10 - 15 frames per second (fps).

These rates provides for rapidly updated provision of information and hence provide for a more accurate estimation of the magnitude of a specific crop coverage of part of the field specifically and the field as a whole generally.

### The second aspect of the present invention

In a second aspect the present invention relates to a use of a tedding apparatus according to the first aspect of the present invention in the manufacture of a biomass feedstock based on grass and clover.

In one embodiment of the second aspect of the present invention the use of the tedding apparatus is for the manufacture of a biomass feedstock for use in silage production.

In one embodiment of the second aspect of the present invention the use is for manufacturing of a biomass feedstock having improved quality as to variation in moisture content.

### The third aspect of the present invention

In a third aspect the present invention relates to a method for tedding of cut biomass lying in an agricultural field according to claim 15.

Such a tedding severity scheme provides for achieving a more homogeneous moisture content in the various parts of biomass comprising the crop of grass and clover.

In one embodiment of the method according to the third aspect of the present invention the adjustment of the severity of the mechanical tedding impact subjected to said biomass as performed in step iii) is based on a predetermined severity adjustment algorithm.

In one embodiment of the method according to the third aspect of the present invention said predetermined severity adjustment algorithm is based on a correlation between the said estimation information relating to a specific crop coverage of said portion of the agricultural field on the one hand, and a quantified severity on the other hand.

By these two embodiments the severity of the tedding can be performed according to a predetermined tedding scheme.

In one embodiment of the method according to the third aspect of the present invention said method is being performed by using an apparatus according to the first aspect of the present invention.

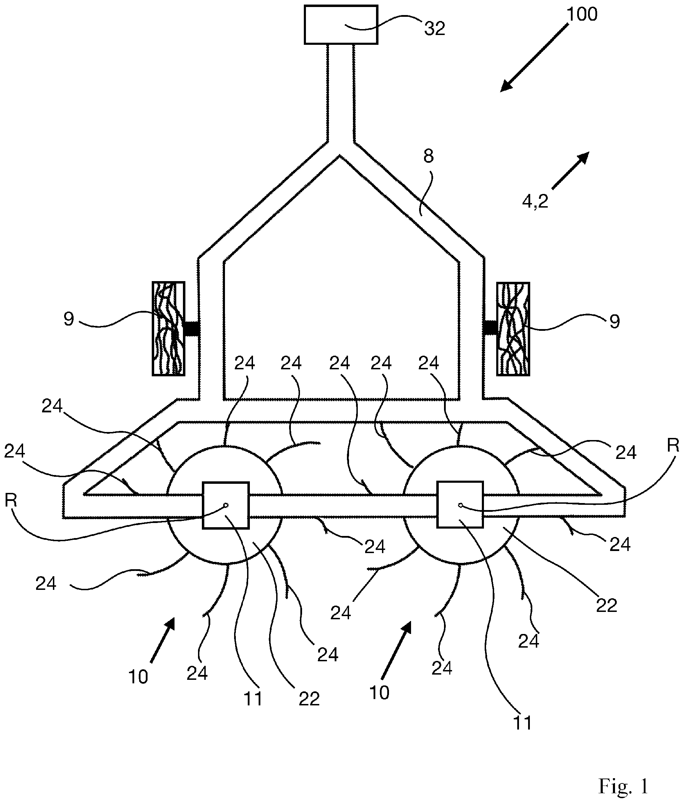

Referring now to the drawings for illustrating the present invention, Fig. 1 is a diagrammatic top view of an embodiment of a tedding apparatus according to the first aspect of present invention.

The tedding apparatus 100 is configured for being towed by a tractor 152 (not seen in Fig. 1) by means of coupling means 32. The frame is supported by wheels 9. In a rear end of the frame are arranged two mechanical tedding devices 10. For ease of illustration only two mechanical tedding devices 10 are shown. However, as many as 20 tedding devices or more may be arranged on a frame 8 of the tedding device of the first aspect of the present invention. Each of the tedding devices 10 of the tedding apparatus 100 shown in Fig.1 comprises a rotating hub 22 comprising a plurality of tines 24. The hub is driven for rotational motion around an essentially vertical rotational axis R by the drive means 11, such as in the form of a hydraulic motor.

In use the rotating hub 22 via its tines 24, which are engaged into the biomass lying on the surface of the ground of the agricultural field, will provide a mechanical impact to the cut grass and clover being present in the agricultural field

The mechanical tedding device 10 of the tedding apparatus 100 also comprises adjustment means for adjusting the severity of the mechanical impact imparted to the biomass 2 being tedded by the mechanical tedding device (not seen in Fig. 1).

This adjustment is being performed in response to a severity adjustment signal being provided to the mechanical tedding device as further explained below.

The adjustment means 18 of the mechanical tedding device 10 may be configured for adjusting said mechanical impact to the biomass 2 by means of varying the rotational speed of the rotating hub 22. Alternatively, the adjustment means 18 of the mechanical tedding device 10 may be configured for adjusting the mechanical impact imposed to the biomass by means of varying the angle of attack of the tines 22.

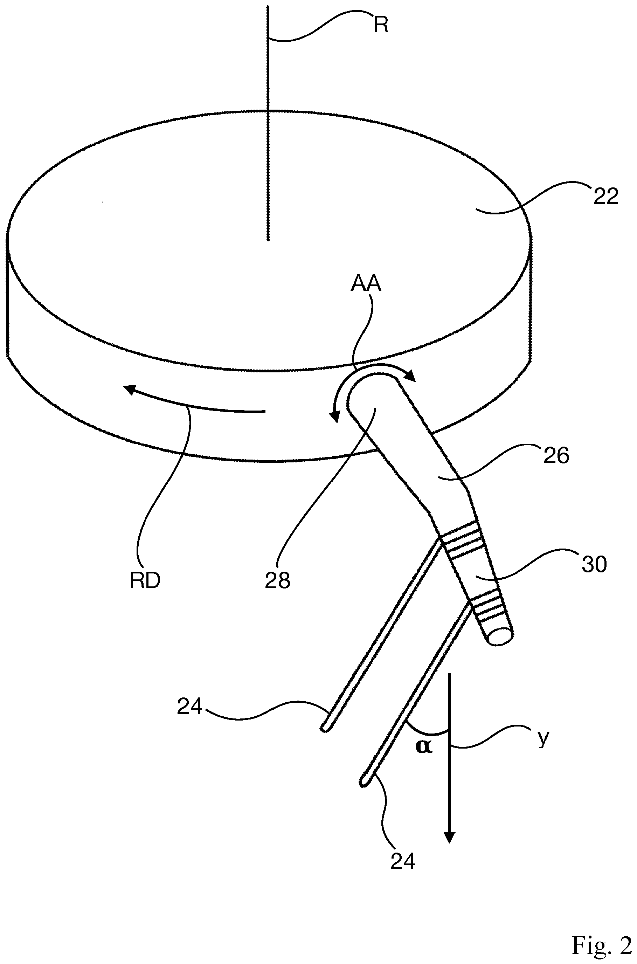

This is further illustrated in Fig. 2.

Fig. 2 is a perspective view illustrating the concept of adjusting the tedding severity by means of adjusting the angle of attack of the tines.

Fig 2 shows the rotating hub 22 which comprises a tine bar 26 having a first end 28 and a second end 30. The first end 28 of the tine bar 26 is rotably mounted in the cylindrical side of the hub 22. The hub rotates in the rotational direction RD as indicated with the arrow. In its second end the 30 the tine bar 26 comprises two tines 24 which are spring mounted on said tine bar 26.

By changing the adjustment angle AA as indicated by the arrow, the angle of the tines 24 relative to the vertical direction Y is being altered, thereby adjusting the angle of attack α of the tines on the biomass, which represents an adjustment of the lifting effect of said tines 24 of the tine bar 26.

For simplicity only one tine bar comprising two tines 24 is illustrated in Fig. 2. As indicated in Fig. 1 the hub will typically comprise a plurality of tines 24 symmetrically arranged on said hub 22.

Accordingly, during operation of the tedding apparatus 100, cut biomass 2 lying on an agricultural field 4 may by the mechanical tedding devices 10 of the apparatus be subjected to a mechanical impact, the severity of which may be adjusted, either by adjustment of the rotational speed of the tines 24 or by adjustment of the angle of attack α of the tines 24 on the biomass 2.

Depending on the degree of severity of the mechanical impact subjected to the biomass by the mechanical tedding devices 10, a varying degree of movement of the biomass, and hence also of drying rate will result.

Now, due to the more robust structure of grass, compared to clover, areas of the agricultural field comprising a relatively large coverage of grass and/or a relatively low coverage of clover will need a more severe mechanical tedding of the biomass in order to arrive at biomass feedstock, which at the time immediately prior to stacking in a silage silo, will be more homogeneous as to moisture content.

Likewise, areas of the agricultural field 4 comprising a relatively low coverage of grass and/or a relatively high coverage of clover will need a less severe mechanical tedding of the biomass in order to arrive at biomass feedstock, which at the time immediately prior to stacking in a silage silo, will be more homogeneous as to moisture content.

Hence, by adjustment of the mechanical severity imparted to the biomass 2 lying on the agricultural field 4 by the mechanical tedding devices 10, depending on the coverage of grass and/or the coverage of clover, an improved quality of biomass for use as feedstock in a silage manufacturing process will result.

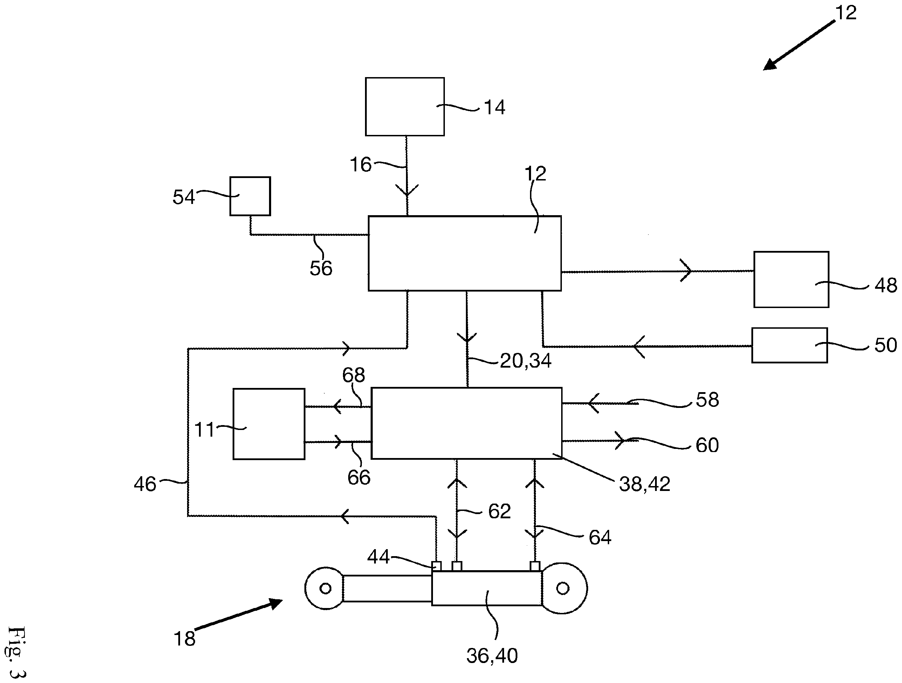

In operation of the tedding apparatus 100 of the first aspect of the present invention the adjustment of the severity imparted by the tedding devices 10 are adjusted in response to an estimation information 16 provided to a control unit as explained with reference to Fig. 3 below. The estimation information relates to an estimated magnitude of a specific crop coverage, such as the crop coverage of grass or the crop coverage of clover, depending on the position at the agricultural field 4.

As already indicated, based on such estimation information 16, the severity imparted to the biomass 2 by the mechanical tedding mechanisms may be adjusted in relation to the magnitude of a specific crop coverage, thereby obtaining a more homogeneous moist content of the biomass.

Fig. 3 schematically illustrates the working mode of a tedding apparatus 100 according to one embodiment of the first aspect of the present invention. Fig. 3 shows a control system controlled by a control unit 12 and for controlling the tedding apparatus 100 according to the first aspect of the preset invention.

The control unit 12 is connected to input means 50, such as an alphanumeric keyboard which may be used for setting up and altering the settings of the operation of the control unit 12. A display 48, such as a monitor is also connected to the control unit 12. The display allows an operator to monitor the settings and the operation of part of the control unit and optionally also of the tedding apparatus.

The control unit 12 is connected to the electronically controlled regulator 38 in the form of a hydraulic valve 42 which comprises an input hose 58 for pressurized hydraulic fluid from a hydraulic pump. The hydraulic valve 42 also comprises a return hose 60 for pressurized hydraulic fluid.

Furthermore, the electronically controlled regulator 38,42 is via hoses 62 and 64 connected to the actuator 36 in the form of a hydraulic actuator 40.

A sensor 44 arranged at the hydraulic actuator 40 is configured for providing the control unit 12 with information 46 relating to the current degree of extraction of that hydraulic actuator 28.

The hydraulic actuator 40 shown in Fig. 3 may be part of the adjustment means 18 of the mechanical tedding device 10 of the tedding apparatus. Accordingly, the hydraulic actuator 40 may be used for adjustment of the angle of attack α of the tines 24 of the hub 22 of the mechanical tedding device, relative to a vertical direction Y.

As seen in Fig. 3, the hydraulic valve 42 is also connected to the drive means 11 which may be a hydraulic motor for driving the rotation of the hub 22 of the mechanical tedding device.

Accordingly, the hydraulic valve 42 may control the pressure of the hydraulic fluid flowing to the hydraulic drive means 11 and thereby adjust the rotational speed of that hub and in this way adjust the mechanical impact imparted to the cut biomass by the mechanical tedding device.

The control unit 12 is also connected to an estimation device 14. The estimation device comprises a data storage which is coupled to the control unit 12 and supplies estimation information 16 relating to an estimated magnitude of a specific crop coverage of various portions 6 of the agricultural field 4.

Accordingly, the data storage 14 comprises information relating to the variation of a specific crop coverage though out the agricultural field, or a part thereof.

As the control unit 12 is also coupled to a global navigation satellite system (GNSS) 54 providing position indicating information 56 to the control unit 12, it will during operation of the tedding apparatus 100 continuously be possible to establish on the one hand the position of the mechanical tedding device(s) (as provided by said GNSS 54) and on the other hand estimation information relating to an estimated magnitude of a specific crop coverage of that position (provided by said data storage 14). On the basis of these two kinds of information the severity imparted to the cut biomass 2 lying on the field 4 by the mechanical tedding devices 10 may be adjusted in dependence of the specific crop coverage at the specific position of the mechanical tedding device(s).

Such an adjustment may be performed in accordance with a predetermined severity adjustment algorithm.

A suitable predetermined severity adjustment algorithm may be achieved by configuring the control unit 12 so as to provide the severity adjustment signal 20 to the mechanical tedding device 10, optionally via the regulator 28 and the actuator 36, in such a way that a relatively high estimated magnitude of grass coverage and/or a relatively low estimated magnitude of clover coverage at the portion 6 of said agricultural field 4 will corresponds to a relatively high degree of severity of the mechanical tedding being provided to said agricultural biomass 2 by said tedding device 10; whereas a relatively low estimated magnitude of grass coverage and/or a relatively high estimated magnitude of clover coverage corresponds to a relatively low degree of severity of the mechanical tedding being provided to said agricultural biomass 2 by said tedding device 10.

As already suggested, a relatively high degree of severity of the mechanical tedding is provided by a relatively high rotational speed of the hub 22 and/or a relatively low lifting effect of the tines 24 of the mechanical tedding device 10; whereas a relatively low degree of severity of the mechanical tedding is provided by a relatively low rotational speed of the hub 22 and/or a relatively high lifting effect of the tines 24 of the mechanical tedding device.

As a guideline, Table 1 below advises one scheme of adjustment of the severity of the mechanical impact to be provided to said cut biomass, depending on the grass/clover coverage at the position of the tedding device(s).

**Table 1**

| **Grass:clover ratio** | **Optimum severity to be imparted to the biomass** |
|---|---|
| High, e.g. above 60/40 | Maximum degree of severity |
| Medium, e.g. 40/60 - 60/40 | Medium degree of severity |
| Low, e.g. below 40/60 | Low degree of severity |

Table 1 simply sets out in respect of a number of ranges of grass/clover ratios, which has been estimated, an optimum degree of severity to be imparted to the biomass by the mechanical tedding mechanism 10 of the cultivation apparatus 100.

Based on such a severity adjustment algorithm the control unit 12 which is continuously being provided with information from the sensor 44 relating to the degree of expansion of the hydraulic actuator 40 will then be able to determine whether or not an adjustment of the adjustment means 18 of the mechanical tedding mechanism 10 of the tedding apparatus 100 is needed, and in such a case, whether such an adjustment involves a lowering or a raising of the degree of severity of the tedding and how much such a lowering or raising amounts to.

Based on this determination the control unit 12 sends a severity adjustment signal 20 to the hydraulic valve 42, which may, in response thereto, effect an expansion or contraction of the hydraulic actuator 40, as the case may be; and/or alternatively, regulate the rotational speed of the hub 22 of the drive means 11 of the mechanical tedding device(s).

The hydraulic actuator 36,40 and the hydraulic valve 38,42 thereby is part of the adjustment means 18 of the mechanical tedding device 10 of the apparatus 100.

Thereby, the hydraulic valve 38,42 may, via the hydraulic actuator 40, adjust the tedding severity imparted to the biomass 2, for example by varying the rotational speed of said one or more rotating hubs 22, or by varying the angle of attack α of the tines 24.

In order to obtain the estimation information 16 relating to an estimated magnitude of a specific crop coverage being present at specific portions 6 of the agricultural field 4 it will be necessary to scan the field 4 using an optical system which is configured for capturing images of that field and to perform an image analysis of that field.

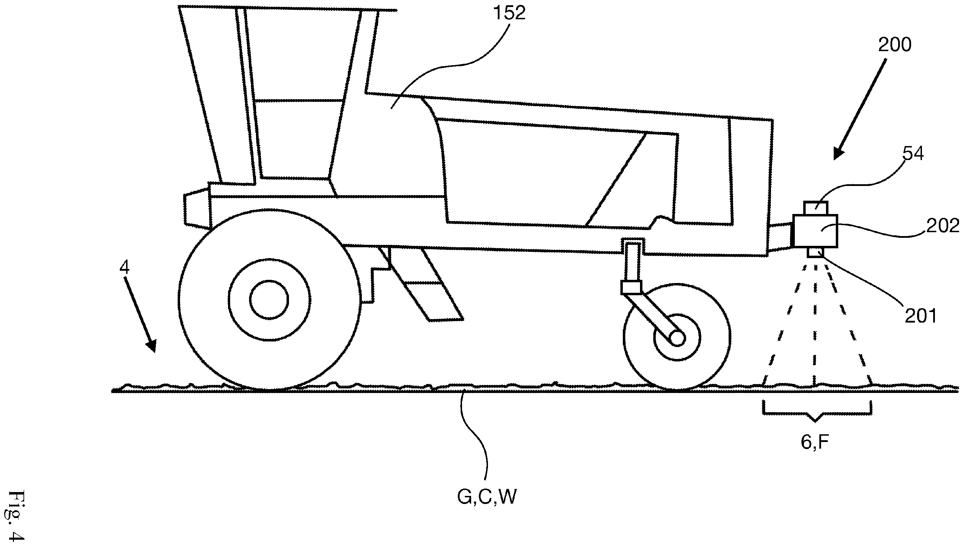

This part of the invention is illustrated in Fig. 4, 5 and 6a - 6c.

Fig. 4 is a side view illustrating an agricultural vehicle 152 in the form of a tractor driving over the ground of the agricultural field 4 comprising biomass 2 of grass G, clover C and weed W.

The tractor is equipped with an optical system 200 comprising an image capturing device 202 configured for capturing images 204. Above the image capturing device 202 is arranged a receiver of a global navigation satellite system 54 (GNSS) for providing position indicating information 56 of that optical system.

The image capturing device 202 comprises optics 201 which has a focus area F at the ground which may correspond to a portion 6 of the agricultural field 4.

Accordingly, by driving over the agricultural field 4 by the tractor illustrated in Fig. 4, it is possible to scan the field and to process the images captured and to analyze these images so as to gain information relating to an estimation information 16 relating toan estimated magnitude of a specific crop coverage being present at various positions of the agricultural field 4.

Moreover, as the tractor is equipped with the receiver of a global navigation satellite system 54 (GNSS) for providing position indicating information 56 of that optical system, it is possible to correlated the estimation information 16 relating to an estimated magnitude of a specific crop coverage being present at various positions 6 of the agricultural field 4 to the geographic position of that specific portion 6 of that field.

The operation illustrated in Fig. 4 may preferably be performed every time the agricultural biomass 2 is being cut with the purpose of always having relatively updated information relating to the estimation information 16. In such a situation the tractor 152 will be equipped with a mowing implement for mowing the field upon driving over the ground.

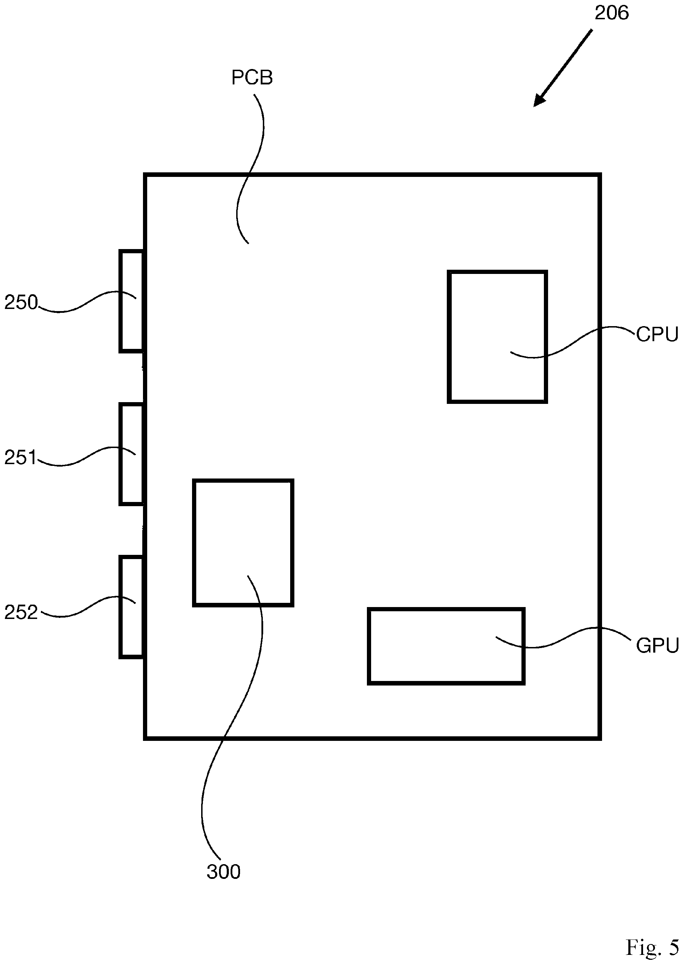

Fig. 5 is a schematic illustration serving the purpose, at a very general level, of explaining the working mode of the image processing device 206 which may be included in the optical system to be used with the present invention. The image processing device 206 comprises a printed circuit board PCB comprising a plurality of electronic components. For the sake of simplicity only a few of these components are shown in Fig. 5.

The circuit board PCB of the image processing device 206 comprises an input port 250 for providing an electronic signal representing an image 204 originating from the image capturing device 202 of the optical system 200.

Additionally, the printed circuit board PCB of the image processing device comprises an output port 252 for providing an electronic signal representing estimation information 16 relating to an estimated magnitude of a specific crop coverage being present in that portion 6 of an agricultural field 4 which corresponds to that specific image 204 being processed by said image processing device 206.

Moreover an input port 251 is provided on the PCB for receiving position indicating information provided by the receiver of a global navigation satellite system 54.

A central processing unit CPU in the circuit board provides for controlling the operation of the image processing device 206.

Also included in the printed circuit board PCB of the image processing device 206 is a graphic processing unit GPU. The graphic processing unit GPU is responsible for performing the operations relating to the image processing.

The circuit board PCB of the image processing device also comprises a data storage 300. The data storage 300 has been supplied with a representation of learning data which will aid the image processing device 206 in providing the estimation information 16 relating to an estimated magnitude of a specific crop coverage being present in that portion 6 of an agricultural field 4 which corresponds to image 204 being processed by said image processing device 202.

It is preferred that the representation of learning data which is stored in the data storage 300 is being in the form of a model of learning data. Such a model of learning data may be computer program product embedded in said data storage 300 and being able to perform an algorithm for image processing of information relating to an image being analyzed by said image processing device 206.

When an image 204 has been analyzed by the image processing device 206 so that the estimation information 16 relating to a an estimated magnitude of a specific crop coverage being present at a specific position 6 of the field has been determined, the image processing device makes a correlation between estimation information 16 of the portion 6 of the field 4 with the geographic position of that field and this correlation will be stored on the data storage 300.

For the purpose of understanding the concept of the image processing device, the algorithm based on the learning data may obtained by analyzing a set 208 of learning images each of which represents a learning image 210 an agricultural field comprising grass and clover.

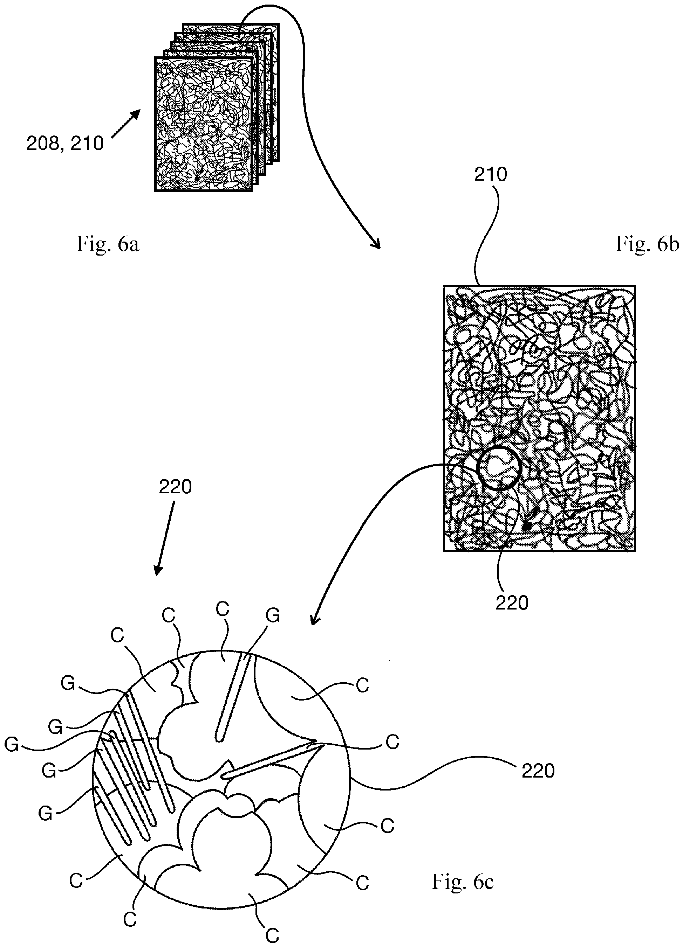

The concept of learning images is illustrated in Fig. 6a, 6b and 6c.

Fig. 6a illustrates such a set 208 of learning images 210 which set for the sake of simplicity comprises only five learning images 210.

Fig. 6b illustrates the middle learning image 210 of the five learning images from Fig. 6a.

Fig. 6c is a close-up depiction of a portion 220 of the learning image 210 in Fig. 6b. Such a portion may represent an image patch comprising a relatively limited number of image pixels.

Fig. 6c shows that the learning data in portion 220 of the learning image 210 shown in Fig. 6b comprises an array of different elements of plant material which have been annotated so that each specific element in the learning image shown in Fig. 6c has been provided with information as to which type of plant (grass or clover) that specific element belongs to.

The annotation shown in Fig. 6c illustrates that clover material has been annotated "C", whereas grass material has been annotated "G".

Optionally, also information relating to annotations of weed could have been provided in the leaning date of the learning image shown in Fig. 6c. Such a weed annotation could have been "W" for weed.

Accordingly, the learning data represents an array of learning images 208,210 which have been annotated so as to assign the type of plant material (grass, clover and optionally also weed) to each element of each of the images of the learning data.

The set 208 of learning images 210 may be a set of real images or artificial images, such as a computer generated image, of a portion 6 of an agricultural field 4.

Based on such learning data originating from annotated images, a model of learning data may be constructed and such a model of learning data may, as already mentioned, be a computer program product embedded in said data storage 300 and being able to conduct an algorithm for image processing of information relating to an image 204 being analyzed by said image processing device 206.

Now returning to Fig. 5: During operation optical system 200, when the image processing device 206 via the input port 250 receives information relating to an image 204 captured by the image capturing device 202, the CPU arranges for processing this information and the processing itself is being performed by the graphic processing unit GPU. This is brought about by allowing the model of the learning data stored in the data storage 300 of the image processing device to analyze that image.

In such an analysis operation, the image processing device 206 is assigning various elements of the image to various types of plants such as grass (G), clover (C) and optionally also weed (W).

The analysis performed by the image processing device 206 may be based on colour distinction, edge detection of different plant material and morphology of different plant material, use of texture analysis filter(s), or entropy of image patches, making up the captured image.

Further, the analysis performed by the image processing device 206 may be based utilizing a numerical mathematical model based on support vector machines, k-nearest neighbours, decision trees, adaboost, gaussian mixture models or linear discriminant analysis in order to distinguish areas of that image as being as either grass (G) and/or clover (C) and/or weed (W).

The analysis performed by the image processing device may furthermore involve deep learning algorithms and/or artificial intelligence and/or neural network(s) may be used.

Moreover, in the analysis of the representation of the image 204 received, the image processing device 206 also provides for summing up the area of a specific crop coverage in that image. In this way, the image processing device provides for estimation information 16 relating to an estimated magnitude of a specific crop coverage being present in the portion 6 of the agricultural field 4 corresponding to said image 204.

The estimation information 16 relating to an estimated magnitude of a specific crop coverage may relate to one or more of the following: coverage of grass; and/or coverage of clover; and/or coverage of weed; and/or a ratio relating to: coverage of grass / coverage of clover; and/or a ratio relating to: coverage of grass / coverage of clover / coverage of weed.

As mentioned, the estimation information 16 relating to an estimated magnitude of a specific crop coverage at various portions 6 of the agricultural field 4 is correlated with the geographic position of that specific portion and this correlation of information relating to various portions covering of the whole field or part thereof is stored on the data storage 300.

Prior to using the control system as depicted in Fig. 3, the correlation information stored on data storage 300 will be transferred to the data storage 14 which is connected to the control unit 12.

Although the process for operating the optical system in order to gain the estimation information 16 has been exemplified in a way where the image capturing device 202 is carried by a tractor 152, it should be noted that the image capturing device in some specific embodiments may be arranged in a drone which has been configured for flying over the agricultural field and wherein information relating to the captured images or wherein the estimation information is being transferred, such as wirelessly transferred to the data storage 14 of the control unit 12 of the apparatus 100.

It should be noted that image processing analysis have been known for many years and that a person skilled in the art will be able to provide the required equipment and the correct set up of such equipment for performing such analysis.

Special reference is made to the following documents which specifically deal with image processing analysis of images of an agricultural field comprising grass and clover with the purpose of determining a clover grass ratio of a portion of such a field:
A. K. Mortensen et al., J. Imaging 2017, 3, 59; and
S. Skovsen et al., Sensors 2017, 2930.

### List of reference numerals

- 2: Cut biomass
- 4: Agricultural field
- 6: Portion of agricultural field
- 8: Frame of tedding apparatus
- 9: Wheel
- 10: Mechanical tedding device
- 11: Drive means for rotating hub
- 12: Control unit
- 14: Data storage
- 16: Estimation information
- 18: Adjustment means for adjusting tedding severity
- 20: Severity adjustment signal
- 22: Rotating hub of mechanical tedding device
- 24: Tine of mechanical tedding device
- 26: Tine bar
- 28: First end of tine bar
- 30: Second end of tine bar
- 32: Coupling means of frame
- 34: Electric signal
- 36: Actuator
- 38: Regulator
- 40: Hydraulic actuator
- 42: Hydraulic valve
- 44: Sensor
- 46: Information provided by sensor
- 48: Display means
- 50: Input means
- 54: GNSS (Global Navigation satellite system)
- 56: Position indicating signal from GNSS (Global Navigation satellite system)
- 58: Input hose for hydraulic fluid from hydraulic pump
- 60: Return hose for hydraulic fluid to hydraulic pump
- 62,64: Hydraulic hose
- 66,68: Hydraulic hose
- 100: Tedding apparatus
- 152: Agricultural vehicle
- 200: Optical system
- 201: Optics of optical system
- 202: Image capturing device
- 204: Image captured by said image capturing device
- 206: Image processing device
- 208: Set of learning images
- 210: Learning image
- 220: Portion or patch of learning image
- 250: Input port of image processing device
- 251: Input of position indicating information in image processing device
- 252: Output port of image processing device
- 300: Data storage of optical system
- AA: Adjustment angle
- CPU: Central processing unit
- F: Focus area of optics of optical system
- GPU: Graphic processing unit
- PCB: Printed circuit board
- R: Essentially vertical axis of rotation
- RD: Rotational direction of hub
- Y: Vertical direction
- α: Angle between tine and vertical direction
- G: Grass
- C: Clover
- W: Weed

## Claims

1. A tedding apparatus (100) for tedding cut agricultural biomass (2) lying in an agricultural field (4), said cut biomass comprises a crop of grass and clover originating from its growth site at a portion (6) of said agricultural field; wherein said apparatus comprises:
- a frame (8);
- one or more mechanical tedding devices (10) for providing mechanical tedding to said cut biomass (2); said one or more mechanical tedding devices is/are arranged on said frame (8);
- a control unit (12) for controlling the operation of said one or more mechanical tedding devices (10) and/or for controlling the operation of said apparatus (100);
wherein said control unit (12) is configured to receive said estimation information (16) from said data storage (14);
wherein in respect of one or more of said mechanical tedding devices (10), said mechanical tedding device comprises adjustment means (18) for adjusting the severity of the mechanical tedding subjected to said biomass (2) originating from said portion (6) of said agricultural field (4), in response to a severity adjustment signal (20) being provided thereto;
wherein said control unit (12) is configured to provide said severity adjustment signal (20) to said mechanical tedding device (10) in response to said estimation information (16), thereby effecting an adjustment of the severity of the mechanical tedding being subjected to said biomass (2), depending on the magnitude of a specific crop coverage being present in said portion (6) of said agricultural field (4);
**characterized by** a data storage (14) for storing estimation information (16) relating to an estimated magnitude of a specific crop coverage being present in said portion (6) of said agricultural field (4) and in that said estimation information (16) relating to an estimated magnitude of a specific crop coverage is independently selected from the group comprising:
- coverage of grass; and/or
- coverage of clover; and/or
- coverage of weed; and/or
- a ratio relating to: coverage of grass / coverage of clover; and/or
- a ratio relating to: coverage of grass / coverage of clover / coverage of weed.

2. A tedding apparatus (100) according to claim 1, wherein in respect of one or more of said mechanical tedding devices (10), said tedding device (10) comprises a rotating hub (22) comprising a plurality of tines (24), wherein said tines are configured to impose a mechanical impact to said agricultural biomass (2); said hub preferably is being configured for performing a rotation around an essentially vertical rotational axis (R).

3. A tedding apparatus (100) according to claim 2, wherein said hub (22) comprises a
plurality of tine bars (26) having a first end (28) and a second end (30); wherein in respect of each tine bar said tine bar is being connected to said hub at its first end (28); and wherein a plurality of tines (24) are connected to said second end (30) of said tine bar (26);
wherein in respect of one or more of said plurality of tine bars (26), said tine bar optionally comprises a bend;
wherein in respect of one or more of said mechanical tedding devices (10), said adjustment means (18) is optionally configured for performing an angle adjustment of said tine bar (26) in said hub (22), thereby adjusting the angle (α) of said tines with the vertical direction (Y), so as to adjust the lifting effect of said plurality of tines (24) of said tine bar (26).

4. A tedding apparatus (100) according to any of the claims 2-3, wherein in respect of one or more of said mechanical tedding devices (10), said adjustment means (18) is configured for adjustment of the speed of rotation of said hub (22).

5. A tedding apparatus (100) according to any of the claims 1 - 4, wherein in respect of one or more of said tedding devices (10) said control unit (12) is being configured to provide said severity adjustment signal (20) to said mechanical tedding device (10) according to a predetermined severity adjustment algorithm;
wherein said predetermined severity adjustment algorithm optionally is based on a correlation between the said estimation information (16) on the one hand and a quantified severity on the other hand.

6. A tedding apparatus (100) according to any of the claims 2-4, wherein in respect of one or more of said mechanical tedding devices (10), said control unit (12) is being configured to provide said severity adjustment signal (20) to said mechanical tedding device (10) in such a way that a relatively high estimated magnitude of grass coverage and/or a relatively low estimated magnitude of clover coverage of said portion (6) of said agricultural field (4) corresponds to a relatively high degree of severity of the mechanical tedding being provided to said agricultural biomass (2) by said tedding device (10); whereas a relatively low estimated magnitude of grass coverage and/or a relatively high estimated magnitude of clover coverage corresponds to a relatively low degree of severity of the mechanical tedding being provided to said agricultural biomass (2) by said tedding device (10);
wherein a relatively high degree of severity of the mechanical tedding optionally is being provided by a relatively high rotational speed of said hub (22) and/or a relatively low lifting effect of said tines (24); whereas a relatively low degree of severity of the mechanical tedding is provided by a relatively low rotational speed of said hub (22) and/or a relatively high lifting effect of said tines (24).

7. A tedding apparatus (100) according to any of the claims 1 - 6, wherein said control unit (12) is configured for independently providing said severity adjustment signal (20) to one or more of said mechanical tedding devices (10).

8. A tedding apparatus (100) according to any of the claims 1-7, wherein said control unit (12) is configured for providing said severity adjustment signal (20) in the form of an electric signal (34), and wherein in respect of one or more of said mechanical tedding devices (10), the severity provided by said mechanical tedding device (10) is being adjusted via an actuator (36) and wherein said mechanical tedding device (10) comprises a regulator (38) configured for adjusting said actuator (36) in response to said electric signal (34).

9. A tedding apparatus (100) according to any of the claims 1-8, wherein in respect of one or more of said mechanical tedding devices (10), said mechanical tedding device (10) comprises a sensor (44) for sensing the current severity setting of said mechanical tedding device (10), and wherein said sensor is coupled to said control unit (12) for providing information (46) to said control unit (12) relating to a current severity setting of said mechanical tedding device (10).

10. A tedding apparatus(100) according to any of the claims 1-9, wherein said control unit (12) is coupled to display means (48), such as in the form of a monitor for allowing an operator to monitor the set up and operation of said apparatus (100);
and/or
wherein said control unit (8) is coupled to input means (50), such as in the form of an alphanumerical keyboard allowing an operator to set up and program said control unit (12);
and/or
wherein said control unit (12) comprises or is configured to be connected to a GNSS (Global Navigation satellite system) (54), such as a GPS in order for that control unit (12) to be configured to receive a position indicating signal (56).

11. A tedding apparatus (100) according to any of the claims 1 - 10, wherein said estimation information (16) relating to an estimated magnitude of a specific crop coverage being present in said portion (6) of said agricultural field (4) has previously been obtained by an optical system (200) for capturing and processing images of said agricultural field (4); said optical system comprises:
- an image capturing device (202) configured for capturing images (204) of said portion (6) of said agricultural field (4);
- an image processing device (206) for analysing an image (204) captured by said image capturing device (206), so as to provide said estimation information (16);
- a global navigation satellite system (GNSS) (54), such as a GPS system, configured for receiving a position indicating signal (56);
- a data storage (300);
wherein said optical system (200) is coupled to said data storage(300) in such a way that said optical system is being configured to allocate said estimation information (16) which is being provided in respect of said images (204) being captured; and wherein said optical system (200) is being configured to allocate coordinates relating to a geographical position of said images (204) being captured; and wherein optical system is being configured for storing on said data storage (300) a correlation between an estimated magnitude of a specific crop coverage at said portion (6) of said agricultural field (4) on the one hand, and the geographical position of said portion (6) of said agricultural field (4) on the other hand; said correlation thereby representing a specific coverage map of said agricultural field (4) or part thereof;
wherein said image processing device (206) optionally is being configured to perform the following steps:
i) receive information representing an image (204) captured by said image capturing device (202);
ii) in respect of said representation of said image (204), performing an image analysis in order to distinguish areas of that image (204) which represents grass (G) and/or clover (C) and/or weed (W);
iii) summing up all areas determined in step ii) which represent grass (G) and/or summing up all areas determined in step ii) which represent clover (C) and/or summing up all areas determined in step ii) which represent weed (W);
iv) on the basis of the summing up performed in step iii), providing in respect of said image (204), said estimation information (16) to be correlated with the position of said portion (6) of said agricultural field (4);
wherein step ii) optionally is based on analysis of image patch features, such as colour distinction, edge detection of different plant material and morphology of different plant material, use of texture analysis filter(s), or entropy of image patches, making up such image (204);
wherein step ii) optionally is being performed by having said image processing device (206) configured for consulting a representation of a set (208) of learning images (210), wherein each learning image (210) in the set (208) of learning images comprises a representation of a real image or an artificial image, such as a computer generated image, of a portion of an agricultural field comprising grass and clover and optionally also weed, and wherein distinct elements of said image has been allocated with information relating to which type of plant (grass (G), clover (C) and optionally weed (W)) that this element represents.

12. A tedding apparatus (100) according to claim 11, wherein step ii) is performed by having said image processing device (206) configured for consulting a representation of learning images (210) in the form of a model capable of performing an algorithm in order to distinguish areas of that image which represents grass (G) and/or clover (C) and/or weed (W);
wherein said model optionally is being configured for utilizing calculated image patch features as defined in claim 11;
wherein said calculated image patch features optionally are being analysed utilizing a numerical mathematical model based on support vector machines, k-nearest neighbours, decision trees, adaboost, gaussian mixture models or linear discriminant analysis in order to distinguish areas of that image as being as either grass (G) and/or clover (C) and/or weed (W).

13. A tedding apparatus (100) according to any of the claims 11 or 12, wherein two or more image capturing devices (202) which collectively are configured for capturing images (204) of two or more portions (6) of said agricultural field (4) have been used for capturing images (204) of said agricultural field (4); wherein said two or more portions of said agricultural field are arranged relative to each other in a mutual staggered arrangement in a direction perpendicular to the moving direction of said optical system (200);
wherein said image processing device (206), in respect of an image (204) captured by each of said image capturing devices (202) is configured for analysing said image so as to provide an estimation information (16) relating to an estimated magnitude of a specific crop coverage being present in the portion (6) of the agricultural field corresponding to each said image (204).

14. Use of a tedding apparatus (100) according to any of the claims 1 - 13 in the manufacture of a biomass feedstock based on grass and clover.

15. A method for tedding of cut biomass (2) lying in an agricultural field (4), said cut biomass comprises a crop of grass and clover originating from growth at a portion (6) of said agricultural field; said method comprises:
i) subjecting said biomass (2) to a mechanical tedding impact;
ii) providing estimation (16) information relating to an estimated magnitude of a specific crop coverage located in said portion of the agricultural field;
iii) adjusting the severity of the mechanical tedding impact subjected to said biomass (2) on the basis of said estimation information (16);
wherein said estimation information (16) relating to an estimated magnitude of a specific crop coverage located in said portion of the agricultural field is independently selected from the group comprising:
- coverage of grass; and/or
- coverage of clover; and/or
- coverage of weed; and/or
- a ratio relating to: coverage of grass / coverage of clover; and/or
- a ratio relating to: coverage of grass / coverage of clover / coverage of weed.

## Patentansprüche

1. Zettgerät (100) zum Zetten von geschnittener landwirtschaftlicher Biomasse (2), die auf einem landwirtschaftlichen Feld (4) liegt, wobei die geschnittene Biomasse ein Erntegut aus Gras und Klee umfasst, die von ihrem Wachstumsort an einem Abschnitt (6) des landwirtschaftlichen Felds stammt; wobei das Gerät Folgendes umfasst:
- einen Rahmen (8);
- eine oder mehrere mechanische Zettvorrichtungen (10), um die geschnittene Biomasse (2) mechanisch zu zetten; wobei die eine oder die mehreren mechanischen Zettvorrichtungen an dem Rahmen (8) angeordnet ist/sind;
- eine Steuereinheit (12) zum Steuern des Betriebs der einen oder der mehreren mechanischen Zettvorrichtungen (10) und/oder zum Steuern des Betriebs des Geräts (100);
wobei die Steuereinheit (12) konfiguriert ist, um die Schätzinformationen (16) aus dem Datenspeicher (14) zu empfangen;
wobei die mechanische Zettvorrichtung in Bezug auf eine oder mehrere der mechanischen Zettvorrichtungen (10) eine Einstelleinrichtung (18) zum Einstellen der Stärke des mechanischen Zettens, dem die Biomasse (2) unterzogen wird, die von dem Abschnitt (6) des landwirtschaftlichen Felds (4) stammt, als Reaktion auf ein Schwereeinstellsignal (20), das ihr bereitgestellt wird, umfasst;
wobei die Steuereinheit (12) konfiguriert ist, um das Schwereeinstellsignal (20) an die mechanische Zettvorrichtung (10) als Reaktion auf die Schätzinformationen (16) bereitzustellen, wodurch eine Einstellung des Schweregrads des mechanischen Zettens, dem die Biomasse (2) unterzogen wird, abhängig von der Größe einer spezifischen Erntegutbedeckung, die in dem Abschnitt (6) des landwirtschaftlichen Felds (4) vorhanden ist, bewirkt wird;
**gekennzeichnet durch** einen Datenspeicher (14) zum Speichern von Schätzinformationen (16), die sich auf eine geschätzte Größe einer spezifischen Erntegutbedeckung beziehen, die in dem Abschnitt (6) des landwirtschaftlichen Felds (4) vorhanden ist, und **dadurch, dass** die Schätzinformationen (16), die sich auf eine geschätzte Größe einer spezifischen Erntegutbedeckung beziehen, unabhängig ausgewählt sind aus der Gruppe, umfassend:
- Bedeckung mit Gras; und/oder
- Bedeckung mit Klee; und/oder
- Bedeckung mit Unkraut; und/oder
- ein Verhältnis in Bezug auf: Bedeckung mit Gras/Bedeckung mit Klee; und/oder
- ein Verhältnis in Bezug auf: Bedeckung mit Gras/Bedeckung mit Klee/Bedeckung mit Unkraut.

2. Zettgerät (100) nach Anspruch 1, wobei die Zettvorrichtung (10) in Bezug auf eine oder mehrere der mechanischen Zettvorrichtungen (10) eine drehende Nabe (22) umfasst, umfassend eine Vielzahl von Zinken (24) aufweist, wobei die Zinken konfiguriert sind, um einen mechanischen Schlag auf die landwirtschaftliche Biomasse (2) auszuüben; wobei die Nabe vorzugsweise konfiguriert ist, um eine Drehung um eine im Wesentlichen vertikale Drehachse (R) auszuführen.

3. Zettgerät (100) nach Anspruch 2, wobei die Nabe (22) eine Vielzahl von Zinkenstangen (26) umfasst, die ein erstes Ende (28) und ein zweites Ende (30) aufweist; wobei die Zinkenstange in Bezug auf jede Zinkenstange an ihrem ersten Ende (28) mit der Nabe verbunden ist; und wobei eine Vielzahl von Zinken (24) mit dem zweiten Ende (30) der Zinkenstange (26) verbunden ist;
wobei die Zinkenstange in Bezug auf eine oder mehrere der Vielzahl von Zinkenstangen (26) optional eine Biegung umfasst;
wobei die Einstelleinrichtung (18) in Bezug auf eine oder mehrere der mechanischen Zettvorrichtungen (10) optional konfiguriert ist, um eine Winkeleinstellung der Zinkenstange (26) in der Nabe (22) auszuführen, wodurch der Winkel (α) der Zinken mit der vertikalen Richtung (Y) eingestellt wird, um die Hubwirkung der Vielzahl von Zinken (24) der Zinkenstange (26) einzustellen.

4. Zettgerät (100) nach einem der Ansprüche 2-3, wobei die Einstelleinrichtung (18) in Bezug auf eine oder mehrere der mechanischen Zettvorrichtungen (10) für eine Einstellung der Drehgeschwindigkeit der Nabe (22) konfiguriert ist.

5. Zettgerät (100) nach einem der Ansprüche 1 - 4, wobei die Steuereinheit (12) in Bezug auf eine oder mehrere der Zettvorrichtungen (10) konfiguriert ist, um das Schweregradeinstellsignal (20) gemäß einem vorbestimmten Schweregradeinstellalgorithmus an die mechanische Zettvorrichtung (10) bereitzustellen;
wobei der vorbestimmte Schweregradeinstellalgorithmus optional auf einer Korrelation zwischen den Schätzinformationen (16) einerseits und einem quantifizierten Schweregrad andererseits basiert.

6. Zettgerät (100) nach einem der Ansprüche 2-4, wobei die Steuereinheit (12) in Bezug auf eine oder mehrere der mechanischen Zettvorrichtungen (10) konfiguriert ist, um das Schweregradeinstellsignal (20) auf eine Weise an die mechanische Zettvorrichtung (10) bereitzustellen, dass eine relativ hohe geschätzte Größe einer Bedeckung mit Gras und/oder eine relativ niedrige geschätzte Größe einer Bedeckung mit Klee des Abschnitts (6) des landwirtschaftlichen Felds (4) einem relativ hohen Schweregrad des mechanischen Zettens entspricht, das durch die Zettvorrichtung (10) an die landwirtschaftliche Biomasse (2) bereitgestellt wird; wohingegen eine relativ niedrige geschätzte Größe einer Bedeckung mit Gras und/oder eine relativ hohe geschätzte Größe einer Bedeckung mit Klee einem relativ niedrigen Schweregrad des mechanischen Zettens entspricht, das durch die Zettvorrichtung (10) an die landwirtschaftliche Biomasse (2) bereitgestellt wird;
wobei ein relativ hoher Schweregrad des mechanischen Zettens optional durch eine relativ hohe Drehgeschwindigkeit der Nabe (22) und/oder eine relativ niedrige Hubwirkung der Zinken (24) bereitgestellt wird; wohingegen ein relativ niedriger Schweregrad des mechanischen Zettens durch eine relativ niedrige Drehgeschwindigkeit der Nabe (22) und/oder eine relativ hohe Hubwirkung der Zinken (24) bereitgestellt wird.

7. Zettgerät (100) nach einem der Ansprüche 1 - 6, wobei die Steuereinheit (12) konfiguriert ist, um das Schweregradeinstellsignal (20) unabhängig an eine oder mehrere der mechanischen Zettvorrichtungen (10) bereitzustellen.

8. Zettgerät (100) nach einem der Ansprüche 1 - 7, wobei die Steuereinheit (12) konfiguriert ist, um das Schweregradeinstellsignal (20) in Form eines elektrischen Signals (34) bereitzustellen, und wobei der von der mechanischen Zettvorrichtung (10) bereitgestellte Schweregrad in Bezug auf eine oder mehrere der mechanischen Zettvorrichtungen (10) über einen Aktuator (36) eingestellt wird, und wobei die mechanische Zettvorrichtung (10) einen Regler (38) umfasst, der konfiguriert ist, um den Aktuator (36) als Reaktion auf das elektrische Signal (34) einzustellen.

9. Zettgerät (100) nach einem der Ansprüche 1 - 8, wobei die mechanische Zettvorrichtung (10) in Bezug auf eine oder mehrere der mechanischen Zettvorrichtungen (10) einen Sensor (44) zum Erfassen der aktuellen Schweregradeinstellung der mechanischen Zettvorrichtung (10) umfasst, und wobei der Sensor mit der Steuereinheit (12) gekoppelt ist, um der Steuereinheit (12) Informationen (46) bezüglich einer aktuellen Schweregradeinstellung der mechanischen Zettvorrichtung (10) bereitzustellen.

10. Zettgerät(100) nach einem der Ansprüche 1 - 9, wobei die Steuereinheit (12) mit einer Anzeigeeinrichtung (48), beispielsweise in Form eines Monitors, gekoppelt ist, um einem Bediener zu ermöglichen, die Einrichtung und den Betrieb des Geräts (100) zu überwachen; und/oder
wobei die Steuereinheit (8) mit einer Eingabeeinrichtung (50), beispielsweise in Form einer alphanumerischen Tastatur, gekoppelt ist, um einem Bediener zu ermöglichen, die Steuereinheit (12) einzurichten und zu programmieren; und/oder
wobei die Steuereinheit (12) ein GNSS (globales Navigationssatellitensystem) (54), wie beispielsweise ein GPS, umfasst oder konfiguriert ist, um damit verbunden zu werden, damit die Steuereinheit (12) konfiguriert ist, um ein Positionsangabesignal (56) zu empfangen.

11. Zettgerät (100) nach einem der Ansprüche 1 - 10, wobei die Schätzinformationen (16), die sich auf eine geschätzte Größe einer spezifischen Erntegutbedeckung bezieht, die in dem Abschnitt (6) des landwirtschaftlichen Felds (4) vorhanden ist, zuvor durch ein optisches System (200) zum Erfassen und Verarbeiten von Bildern des landwirtschaftlichen Felds (4) erlangt wurden; wobei das optische System Folgendes umfasst:
- eine Bildaufnahmevorrichtung (202), die zum Aufnehmen von Bildern (204) des Abschnitts (6) des landwirtschaftlichen Felds (4) konfiguriert ist;
- eine Bildverarbeitungsvorrichtung (206) zum Analysieren eines Bilds (204), das von der Bildaufnahmevorrichtung (206) aufgenommen wird, um die Schätzinformationen (16) bereitzustellen;
- ein globales Navigationssatellitensystem (GNSS) (54), wie beispielsweise ein GPS-System, das zum Empfangen eines Positionsangabesignals (56) konfiguriert ist;
- einen Datenspeicher (300);
wobei das optische System (200) auf eine Weise mit dem Datenspeicher (300) gekoppelt ist, dass das optische System konfiguriert ist, um die Schätzinformationen (16) zuzuordnen, die in Bezug auf die aufgenommenen Bilder (204) bereitgestellt werden; und wobei das optische System (200) konfiguriert ist, um Koordinaten zuzuordnen, die sich auf eine geographische Position der aufgenommenen Bilder (204) beziehen; und wobei das optische System konfiguriert ist, um auf dem Datenspeicher (300) eine Korrelation zwischen einer geschätzten Größe einer spezifischen Erntegutbedeckung in dem Abschnitt (6) des landwirtschaftlichen Felds (4) einerseits und der geographischen Position des Abschnitts (6) des landwirtschaftlichen Felds (4) andererseits zu speichern; wobei die Korrelation dadurch eine spezifische Bedeckungskarte des landwirtschaftlichen Felds (4) oder eines Abschnitts davon darstellt;
wobei die Bildverarbeitungsvorrichtung (206) optional konfiguriert ist, um die folgenden Schritte auszuführen:
i) Empfangen von Informationen, die ein Bild (204) darstellen, das von der Bildaufnahmevorrichtung (202) aufgenommen wird;
ii) in Bezug auf die Darstellung des Bilds (204), Ausführen einer Bildanalyse, um Bereiche dieses Bilds (204) zu unterscheiden, die Gras (G) und/oder Klee (C) und/oder Unkraut (W) darstellen;
iii) Aufsummieren aller in Schritt ii) bestimmten Flächen, die Gras (G) darstellen und/oder Aufsummieren aller in Schritt ii) bestimmten Flächen, die Klee (C) darstellen und/oder Aufsummieren aller in Schritt ii) bestimmten Flächen, die Unkraut (W) darstellen;
iv) basierend auf dem in Schritt iii) durchgeführten Aufsummieren, Bereitstellen der mit der Position des Abschnitts (6) des landwirtschaftlichen Felds (4) zu korrelierenden Schätzinformationen (16) für das Bild (204);
wobei Schritt ii) optional auf einer Analyse von Bildfeldmerkmalen, wie beispielsweise Farbunterscheidung, Randerkennung von unterschiedlichem Pflanzenmaterial und Morphologie von unterschiedlichem Pflanzenmaterial, Verwendung von Texturanalysefilter(n) oder Entropie von Bildfeldern, die ein solches Bild (204) bilden, basiert;
wobei Schritt ii) optional durchgeführt wird, indem die Bildverarbeitungsvorrichtung (206) konfiguriert ist, um eine Darstellung eines Satzes (208) von Lernbildern (210) zu konsultieren, wobei jedes Lernbild (210) in dem Satz (208) von Lernbildern eine Darstellung eines realen Bilds oder eines künstlichen Bilds, wie beispielsweise eines computergenerierten Bilds, eines Abschnitts eines landwirtschaftlichen Felds, das Gras und Klee und optional auch Unkraut umfasst, umfasst, und wobei verschiedenen Elementen des Bilds Informationen zugewiesen wurden, die sich darauf beziehen, welche Art von Pflanze (Gras (G), Klee (C) und optional Unkraut (W)) dieses Element darstellt.

12. Zettgerät (100) nach Anspruch 11, wobei Schritt ii) dadurch ausgeführt wird, dass die Bildverarbeitungsvorrichtung (206) konfiguriert ist, um eine Darstellung von Lernbildern (210) in Form eines Modells zu konsultieren, das in der Lage ist, einen Algorithmus auszuführen, um Bereiche des Bilds zu unterscheiden, die Gras (G) und/oder Klee (C) und/oder Unkraut (W) darstellen;
wobei das Modell optional konfiguriert ist, um berechnete Bildfeldmerkmale gemäß Anspruch 11 zu verwenden;
wobei die berechneten Bildfeldmerkmale optional unter Verwendung eines numerischen mathematischen Modells basierend auf Support-Vektor-Maschinen, K-Nächste-Nachbarn, Entscheidungsbäumen, Adaboost, Gaußschen Mischungsmodellen oder linearer Diskriminanzanalyse analysiert werden, um Bereiche dieses Bilds entweder als Gras (G) und/oder Klee (C) und/oder Unkraut (W) zu unterscheiden.

13. Zettgerät (100) nach einem der Ansprüche 11 oder 12, wobei zwei oder mehrere Bildaufnahmevorrichtungen (202), die gemeinsam zum Aufnehmen von Bildern (204) von zwei oder mehreren Abschnitten (6) des landwirtschaftlichen Felds (4) konfiguriert sind, zum Aufnehmen von Bildern (204) des landwirtschaftlichen Felds (4) verwendet wurden; wobei die zwei oder mehreren Abschnitte des landwirtschaftlichen Felds in Bezug aufeinander in einer gegenseitig versetzten Anordnung in einer Richtung senkrecht zu der Bewegungsrichtung des optischen Systems (200) angeordnet sind;
wobei die Bildverarbeitungsvorrichtung (206) in Bezug auf ein Bild (204), das von jeder der Bildaufnahmevorrichtungen (202) aufgenommen wurde, zum Analysieren des Bilds konfiguriert ist, um Schätzinformationen (16) bereitzustellen, die sich auf eine geschätzte Größe einer spezifischen Erntegutbedeckung beziehen, die in dem Abschnitt (6) des landwirtschaftlichen Felds vorhanden ist, der jedem Bild (204) entspricht.

14. Verwendung eines Zettgeräts (100) nach einem der Ansprüche 1 - 13 bei der Herstellung eines Biomasse-Rohstoffs auf Basis von Gras und Klee.

15. Verfahren zum Zetten von geschnittener Biomasse (2), die auf einem landwirtschaftlichen Feld (4) liegt, wobei die geschnittene Biomasse ein Erntegut aus Gras und Klee umfasst, die aus dem Wachstum auf einem Abschnitt (6) des landwirtschaftlichen Felds stammt; das Verfahren umfassend:
i) Unterziehen der Biomasse (2) einem mechanischen Zettenstoß;
ii) Bereitstellen von Schätzinformationen (16), die sich auf eine geschätzte Größe einer bestimmten Erntegutbedeckung beziehen, die sich in dem genannten Abschnitt des landwirtschaftlichen Felds befindet;
iii) Einstellen des Schweregrads des mechanischen Zettens, dem die Biomasse (2) unterzogen ist, basierend auf den Schätzinformationen (16);
wobei die Schätzinformationen (16), die sich auf eine geschätzte Größe einer spezifischen Erntegutbedeckung beziehen, die sich in dem Abschnitt des landwirtschaftlichen Felds befindet, unabhängig ausgewählt ist aus der Gruppe, umfassend:
- Bedeckung mit Gras; und/oder
- Bedeckung mit Klee; und/oder
- Bedeckung mit Unkraut; und/oder
- ein Verhältnis in Bezug auf: Bedeckung mit Gras/Bedeckung mit Klee; und/oder
- ein Verhältnis in Bezug auf: Bedeckung mit Gras/Bedeckung mit Klee/Bedeckung mit Unkraut.

## Revendications

1. Appareil de fanage (100) pour faner une biomasse agricole coupée (2) se trouvant dans un champ agricole (4), ladite biomasse coupée comprend une récolte d'herbe et de trèfle provenant de son site de culture au niveau d'une parcelle (6) dudit champ agricole ; dans lequel ledit appareil comprend :
- un châssis (8) ;
- un ou plusieurs dispositifs de fanage mécanique (10) pour effectuer un fanage mécanique de ladite biomasse coupée (2) ; lesdits un ou plusieurs dispositifs de fanage mécanique sont disposés sur ledit châssis (8) ;
- une unité de commande (12) pour commander le fonctionnement desdits un ou plusieurs dispositifs de fanage mécanique (10) et/ou pour commander le fonctionnement dudit appareil (100) ;
dans lequel ladite unité de commande (12) est configurée pour recevoir des informations d'estimation (16) en provenance d'un stockage de données (14) ;
dans lequel, par rapport à un ou plusieurs desdits dispositifs de fanage mécanique (10), ledit dispositif de fanage mécanique comprend des moyens d'ajustement (18) pour ajuster la rigueur du fanage mécanique soumis à ladite biomasse (2) provenant de ladite parcelle (6) dudit champ agricole (4), en réponse à un signal d'ajustement de rigueur (20) qui lui est fourni ;
dans lequel ladite unité de commande (12) est configurée pour fournir ledit signal d'ajustement de rigueur (20) audit dispositif de fanage mécanique (10) en réponse auxdites informations d'estimation (16), effectuant ainsi un ajustement de la rigueur du fanage mécanique étant soumis à ladite biomasse (2), en fonction de l'ampleur d'une couverture de récolte spécifique présente dans ladite parcelle (6) dudit champ agricole (4) ;
**caractérisé par** un stockage de données (14) pour stocker des informations d'estimation (16) relatives à une ampleur estimée d'une couverture de récolte spécifique présente dans ladite parcelle (6) dudit champ agricole (4) et en ce que lesdites informations d'estimation (16) relatives une ampleur estimée d'une couverture de récolte spécifique est sélectionnée indépendamment dans le groupe comprenant :
- couverture d'herbe ; et/ou
- couverture de trèfle ; et/ou
- couverture des mauvaises herbes ; et/ou
- un ratio relatif à : couverture d'herbe/couverture de trèfle ; et/ou
- un ratio relatif à : couverture d'herbe / couverture de trèfle / couverture de mauvaises herbes.

2. Appareil de fanage (100) selon la revendication 1, dans lequel, par rapport à un ou plusieurs desdits dispositifs de fanage mécanique (10), ledit dispositif de fanage (10) comprend un moyeu rotatif (22) comprenant une pluralité de dents (24), dans lequel lesdites dents sont configurées pour imposer un impact mécanique à ladite biomasse agricole (2) ; ledit moyeu est de préférence configuré pour effectuer une rotation autour d'un axe de rotation essentiellement vertical (R).

3. Appareil de fanage (100) selon la revendication 2, dans lequel ledit moyeu (22) comprend une pluralité de barres à dents (26) ayant une première extrémité (28) et une seconde extrémité (30) ; dans lequel, par rapport à chaque barre à dents, ladite barre à dents est reliée audit moyeu au niveau de sa première extrémité (28) ; et dans lequel une pluralité de dents (24) sont reliées à ladite seconde extrémité (30) de ladite barre à dents (26) ;
dans lequel, par rapport à une ou plusieurs de ladite pluralité de barres à dents (26), ladite barre à dents comprend éventuellement un coude ;
dans lequel, par rapport à un ou plusieurs desdits dispositifs de fanage mécanique (10), lesdits moyens d'ajustement (18) sont éventuellement configurés pour effectuer un ajustement d'angle de ladite barre à dents (26) dans ledit moyeu (22), ajustant ainsi l'angle (α) desdites dents avec la direction verticale (Y), de manière à ajuster l'effet de levage de ladite pluralité de dents (24) de ladite barre à dents (26).

4. Appareil de fanage (100) selon l'une quelconque des revendications 2 à 3, dans lequel, par rapport à un ou plusieurs desdits dispositifs de fanage mécanique (10), lesdits moyens d'ajustement (18) sont configurés pour ajuster la vitesse de rotation dudit moyeu (22).

5. Appareil de fanage (100) selon l'une quelconque des revendications 1 à 4, dans lequel, par rapport à un ou plusieurs desdits dispositifs de fanage (10), ladite unité de commande (12) est configurée pour fournir ledit signal d'ajustement de rigueur (20) audit un dispositif de fanage mécanique (10) selon un algorithme d'ajustement de rigueur prédéterminé ;
dans lequel ledit algorithme d'ajustement de rigueur prédéterminé est éventuellement basé sur une corrélation entre lesdites informations d'estimation (16) d'une part et une rigueur quantifiée d'autre part.

6. Appareil de fanage (100) selon l'une quelconque des revendications 2 à 4, dans lequel, par rapport à un ou plusieurs desdits dispositifs de fanage mécanique (10), ladite unité de commande (12) est configurée pour fournir ledit signal d'ajustement de rigueur (20) audit dispositif de fanage mécanique (10) de telle sorte qu'une ampleur estimée relativement élevée de la couverture d'herbe et/ou une ampleur estimée relativement faible de la couverture de trèfle de ladite parcelle (6) dudit champ agricole (4) corresponde à un degré de rigueur relativement élevé du fanage mécanique étant réalisé sur ladite biomasse agricole (2) par ledit dispositif de fanage (10) ; tandis qu'une ampleur estimée relativement faible de la couverture d'herbe et/ou une ampleur estimée relativement élevée de la couverture de trèfle corresponde à un degré de rigueur relativement faible du fanage mécanique réalisé sur ladite biomasse agricole (2) par ledit dispositif de fanage (10) ;
dans lequel un degré de rigueur relativement élevé du fanage mécanique est éventuellement assuré par une vitesse de rotation relativement élevée dudit moyeu (22) et/ou un effet de levage relativement faible desdites dents (24) ; tandis qu'un degré de rigueur relativement faible du fanage mécanique est assuré par une vitesse de rotation relativement faible dudit moyeu (22) et/ou un effet de levage relativement élevé desdites dents (24).

7. Appareil de fanage (100) selon l'une quelconque des revendications 1 à 6, dans lequel ladite unité de commande (12) est configurée pour fournir indépendamment ledit signal d'ajustement de rigueur (20) à un ou plusieurs desdits dispositifs de fanage mécanique (10).

8. Appareil de fanage (100) selon l'une quelconque des revendications 1 à 7, dans lequel ladite unité de commande (12) est configurée pour fournir ledit signal d'ajustement de rigueur (20) sous la forme d'un signal électrique (34), et dans lequel, par rapport à un ou plusieurs desdits dispositifs de fanage mécanique (10), la rigueur appliquée par ledit dispositif de fanage mécanique (10) est ajustée via un actionneur (36) et dans lequel ledit dispositif de fanage mécanique (10) comprend un régulateur (38) configuré pour ajuster ledit actionneur (36) en réponse audit signal électrique (34).

9. Appareil de fanage (100) selon l'une quelconque des revendications 1 à 8, dans lequel, par rapport à un ou plusieurs desdits dispositifs de fanage mécanique (10), ledit dispositif de fanage mécanique (10) comprend un capteur (44) pour détecter le réglage de rigueur actuel dudit dispositif de fanage mécanique (10), et dans lequel ledit capteur est couplé à ladite unité de commande (12) pour fournir des informations (46) à ladite unité de commande (12) concernant un réglage de rigueur actuel dudit dispositif de fanage mécanique (10).

10. Appareil de fanage (100) selon l'une quelconque des revendications 1 à 9, dans lequel ladite unité de commande (12) est couplée à des moyens d'affichage (48), tels que sous la forme d'un moniteur pour permettre à un opérateur de surveiller le réglage et le fonctionnement dudit appareil (100) ; et/ou
dans lequel ladite unité de commande (8) est couplée à des moyens d'entrée (50), tels que sous la forme d'un clavier alphanumérique permettant à un opérateur de régler et de programmer ladite unité de commande (12) ; et/ou
dans lequel ladite unité de commande (12) comprend ou est configurée pour être connectée à un GNSS (système mondial de navigation par satellite) (54), tel qu'un GPS afin que cette unité de commande (12) soit configurée pour recevoir un signal d'indication de position (56).

11. Appareil de fanage (100) selon l'une quelconque des revendications 1 à 10, dans lequel lesdites informations d'estimation (16) relatives à une ampleur estimée d'une couverture de récolte spécifique étant présente dans ladite parcelle (6) dudit champ agricole (4) ont été préalablement obtenues par un système optique (200) pour capturer et traiter des images dudit champ agricole (4) ; ledit système optique comprend :
- un dispositif de capture d'images (202) configuré pour capturer des images (204) de ladite parcelle (6) dudit champ agricole (4) ;
- un dispositif de traitement d'image (206) pour analyser une image (204) capturée par ledit dispositif de capture d'image (206), de manière à fournir lesdites informations d'estimation (16) ;
- un système global de navigation par satellite (GNSS) (54), tel qu'un système GPS, configuré pour recevoir un signal d'indication de position (56) ;
- un stockage de données (300) ;
dans lequel ledit système optique (200) est couplé audit stockage de données(300) de telle manière que ledit système optique soit configuré pour attribuer lesdites informations d'estimation (16) qui sont fournies par rapport auxdites images (204) étant capturées ; et dans lequel ledit système optique (200) est configuré pour attribuer des coordonnées relatives à une position géographique desdites images (204) étant capturées ; et dans lequel le système optique est configuré pour stocker sur ledit stockage de données (300) une corrélation entre une ampleur estimée d'une couverture de récolte spécifique au niveau de ladite parcelle (6) dudit champ agricole (4), d'une part, et la position géographique de ladite parcelle (6) dudit champ agricole (4) d'autre part ; ladite corrélation représentant ainsi une carte de couverture spécifique dudit champ agricole (4) ou d'une partie de celui-ci ;
dans lequel ledit dispositif de traitement d'image (206) est éventuellement configuré pour effectuer les étapes suivantes :
i) réception d'informations représentant une image (204) capturée par ledit dispositif de capture d'image (202) ;
ii) par rapport à ladite représentation de ladite image (204), réalisation d'une analyse d'image afin de distinguer des zones de cette image (204) qui représentent de l'herbe (G) et/ou du trèfle (C) et/ou des mauvaises herbes (W) ;
iii) addition de toutes les zones déterminées à l'étape ii) qui représentent de l'herbe (G) et/ou addition de toutes les zones déterminées à l'étape ii) qui représentent le trèfle (C) et/ou addition de toutes les zones déterminées à l'étape ii) qui représentent des mauvaises herbes (W);
iv) sur la base de l'addition effectuée à l'étape iii), fourniture, par rapport à ladite image (204), desdites informations d'estimation (16) à corréler avec la position de ladite parcelle (6) dudit champ agricole (4) ;
dans lequel l'étape ii) est éventuellement basée sur une analyse des caractéristiques de vignettes d'image, telles que la distinction des couleurs, la détection des contours de différents matériaux végétaux et la morphologie de différents matériaux végétaux, l'utilisation d'un ou plusieurs filtres d'analyse de texture ou l'entropie des vignettes d'images, constituant ces image (204) ;
dans lequel l'étape ii) est éventuellement exécutée en configurant ledit dispositif de traitement d'image (206) pour consulter une représentation d'un ensemble (208) d'images d'apprentissage (210), dans lequel chaque image d'apprentissage (210) dans l'ensemble (208) d'images d'apprentissage comprend une représentation d'une image réelle ou d'une image artificielle, telle qu'une image générée par ordinateur, d'une parcelle d'un champ agricole comprenant de l'herbe et du trèfle et éventuellement également des mauvaises herbes, et dans lequel des éléments distincts de ladite image se sont vus attribuer des informations relatives au type de plante (herbe (G), trèfle (C) et éventuellement mauvaises herbes (W)) que représente cet élément.

12. Appareil de fanage (100) selon la revendication 11, dans lequel l'étape ii) est effectuée en configurant ledit dispositif de traitement d'image (206) pour consulter une représentation d'images d'apprentissage (210) sous la forme d'un modèle capable d'exécuter un algorithme afin de distinguer les zones de cette image qui représentent de l'herbe (G) et/ou du trèfle (C) et/ou des mauvaises herbes (W) ;
dans lequel ledit modèle est éventuellement configuré pour utiliser des caractéristiques de vignettes d'image calculées telles que définies dans la revendication 11 ;
dans lequel lesdites caractéristiques de vignettes d'image calculées sont éventuellement analysées à l'aide d'un modèle mathématique numérique basé sur des machines à vecteurs de support, des k plus proches voisins, des arbres décisionnels, adaboost, des modèles de mélange gaussien ou une analyse discriminante linéaire afin de distinguer les zones de cette image comme étant de l'herbe (G) et/ou du trèfle (C) et/ou des mauvaises herbes (W).

13. Appareil de fanage (100) selon l'une quelconque des revendications 11 ou 12, dans lequel deux dispositifs de capture d'images ou plus (202) qui sont collectivement configurés pour capturer des images (204) de deux parcelles ou plus (6) dudit champ agricole (4) ont été utilisés pour capturer des images (204) dudit champ agricole (4) ; dans lequel lesdites deux parcelles ou plus dudit champ agricole sont agencées les unes par rapport aux autres selon un agencement mutuellement décalé dans une direction perpendiculaire à la direction de déplacement dudit système optique (200) ;
dans lequel ledit dispositif de traitement d'image (206), par rapport à une image (204) capturée par chacun desdits dispositifs de capture d'image (202), est configuré pour analyser ladite image de manière à fournir une information d'estimation (16) relative à une ampleur estimée d'une couverture de récolte spécifique étant présente dans la parcelle (6) du champ agricole correspondant à chacune desdites images (204).

14. Utilisation d'un appareil de fanage (100) selon l'une quelconque des revendications 1 à 13 dans la fabrication d'une matière première de biomasse à base d'herbe et de trèfle.

15. Procédé de fanage de biomasse coupée (2) se trouvant dans un champ agricole (4), ladite biomasse coupée comprenant une récolte d'herbe et de trèfle provenant de la culture d'une parcelle (6) dudit champ agricole ; ledit procédé comprend :
i) la soumission de ladite biomasse (2) à un impact de fanage mécanique ;
ii) la fourniture d'informations d'estimation (16) relatives à une ampleur estimée d'une couverture de récolte spécifique située dans ladite parcelle du champ agricole ;
iii) l'ajustement de la rigueur de l'impact de fanage mécanique soumis à ladite biomasse (2) sur la base desdites informations d'estimation (16) ;
dans lequel lesdites informations d'estimation (16) relatives à une ampleur estimée d'une couverture de récolte spécifique située dans ladite parcelle du champ agricole sont sélectionnées indépendamment dans le groupe comprenant :
- couverture d'herbe ; et/ou
- couverture de trèfle ; et/ou
- couverture de mauvaises herbes ; et/ou
- un ratio relatif à : couverture d'herbe/couverture de trèfle ; et/ou
- un ratio relatif à : couverture d'herbe / couverture de trèfle / couverture de mauvaises herbes.
